Europäisches Patentamt

European Patent Office

Office européen des brevets

(11) Numéro de publication: **0 406 036 A1**

# DEMANDE DE BREVET EUROPEEN

(21) Numéro de dépôt: **90401440.4**

(22) Date de dépôt: **30.05.90**

(51) Int. Cl.⁵: **B60D 1/40, B60D 1/155**

(30) Priorité: **30.06.89 FR 8908813**

(43) Date de publication de la demande:
**02.01.91 Bulletin 91/01**

(84) Etats contractants désignés:
**BE DE DK ES GB IT LU NL**

(71) Demandeur: **S.E.S.R. - SOCIETE EUROPEENNE DE SEMI-REMORQUES**
**44, rue François 1er**
**F-75008 Paris(FR)**

(72) Inventeur: **Petit, Léon**
**44 boulevard Vauban**
**F-89000 Auxerre(FR)**

(74) Mandataire: **Kügele, Bernhard et al**
**NOVAPAT FRANCE 63 bis, boulevard Bessières**
**F-75017 Paris(FR)**

(54) **Remorque et véhicule tracteur munis d'un dispositif d'attelage.**

(57) La présente invention concerne une remorque attelable comportant un dispositif d'attelage apte à coopérer avec un second dispositif d'attelage solidaire d'un autre véhicule. L'un au moins des dispositifs d'attelage est extensible longitudinalement sous l'effet d'un vérin hydraulique dont l'allongement est commandé par un capteur magnétique (11) détectant la présence d'une masse ferromagnétique (6).

Application : Véhicule de transport routier ou ferroviaire de grande longueur.

Fig. 1

EP 0 406 036 A1

## REMORQUE ET VEHICULE TRACTEUR MUNIS D'UN DISPOSITIF D'ATTELAGE EXTENSIBLE.

La présente invention concerne une remorque ainsi qu'un véhicule tracteur comportant un châssis muni d'un premier dispositif d'attelage apte à coopérer avec un second dispositif d'attelage solidaire d'un autre véhicule. Le dispositif d'attelage est extensible longitudinalement sous l'effet d'un vérin hydraulique dont l'allongement est commandé par un moyen d'acquisition de l'angle relatif entre la remorque ou le véhicule tracteur, et le second véhicule.

Il est connu dans l'état de l'art des ensembles routiers composés d'un véhicule tracteur et d'une remorque dont la distance relative peut être modulée. Les ensembles routiers ainsi réalisés respectent la longueur totale admissible par les législations nationales et permettent d'optimiser le volume de chargement. Lors d'un virage l'attelage passe en position d'extension afin d'éviter que les deux véhicules accouplés ne se heurtent.

On a proposé, dans l'état de la technique, diverses solutions mécaniques mettant en oeuvre des engrenages où encore des moyens de guidage de forme cycloïde coopérant avec un galet.

En particulier, la demande de brevet européen n° 85401842.1 déposée le 23 septembre 1985 et publiée sous le n° 0176442 décrit un dispositif de réglage du rapprochement d'une remorque par rapport à un véhicule tracteur. Ce dispositif met en oeuvre une pluralité de détecteurs de proximité disposés le long d'un arc de cercle horizontal ainsi que des tabliers activant les détecteurs. Le dispositif comporte en outre une seconde série de détecteurs agissant au cours des changements de déclivité d'angles.

Le fonctionnement de ce dispositif est le suivant :
Lorsque le véhicule change de direction, le tablier solidaire de la barre de traction décrit un arc de cercle et actionne un détecteur latéral correspondant. Ce détecteur commande le fonctionnement du système de séparation. Lorsque le véhicule revient en ligne droite, le tablier solidaire de la barre de traction se retrouve en face du détecteur central placé sur l'axe de symétrie. Ce détecteur déclenche le système de rapprochement maximum. De la même façon, un système constitué par un balancier coopérant avec un détecteur situé en face de la barre de remorquage assure une extension lors des changements de déclivité.

Le dispositif décrit dans cette demande de brevet présente divers inconvénients. En particulier, son fonctionnement met en oeuvre au moins trois détecteurs, ce qui multiplie les risques de panne. Par ailleurs, bien que la description de cette demande de brevet européen n° 85401842.1 déposée le 23 septembre 1985 et publiée sous le n° 0176442 ne comporte aucune indication à ce sujet, on peut penser que les détecteurs mis en oeuvre sont des détecteurs de contact dont le fonctionnement peut être perturbé par de nombreux facteurs, notamment par une dégradation de l'état de surface, l'interposition de matériaux divers ou encore la déformation accidentelle ou par usure des tabliers et des détecteurs. Par ailleurs, le temps de latence existant entre le moment où le tablier n'est plus en regard du détecteur central et le moment où le tablier vient en contact avec un tablier latéral retarde de façon extrêmement préjudiciable le déclenchement de l'allongement du système d'attelage. Ainsi, lorsque l'ensemble se déplace à une grande vitesse le dispositif, selon cette demande de brevet européen n° 85401842.1 déposée le 23 septembre 1985 et publiée sous le n° 0176442, ne permet pas d'éviter le heurt du véhicule et de sa remorque lors des virages serrés.

La présente invention a pour objet de remédier à ces inconvénients en proposant un système d'une grande fiabilité.

La présente invention concerne plus particulièrement une remorque attelable comportant un châssis muni d'un premier dispositif d'attelage apte à coopérer avec un second dispositif d'attelage solidaire d'un autre véhicule, l'un au moins desdits dispositifs d'attelage étant extensible longitudinalement sous l'effet d'un vérin hydraulique dont l'allongement est commandé par un moyen d'acquisition de l'angle relatif entre la remorque et le second véhicule. Le moyen d'acquisition de l'angle relatif entre les deux véhicules est constitué d'une part par un capteur magnétique unique solidaire de l'un des véhicules et d'autre part, d'une masse ferromagnétique quasi ponctuelle solidaire de l'autre véhicule. Cette masse ferromagnétique est positionnée dans le champ de détection du capteur magnétique lorsque les deux véhicules attelés sont disposés en lignes droites sur un terrain plat. Le capteur magnétique délivre un signal de rapprochement lorsqu'il détecte la présence de ladite masse ferromagnétique.

La présente invention n'est aucunement limitée à des remorques attelables par l'intermédiaire de barres d'accouplement. Elle s'étend au contraire à toutes les remorques quelque soit leur système d'attelage. En particulier, la présente concerne également des remorques mettant en oeuvre une sellette d'attelage coopérant avec une cheville ouvrière.

Par une masse ferromagnétique quasi ponctuelle, il faut entendre une masse magnétique de petite dimension spatiale, la notion de "petite" devant être appréciée en fonction du champ de détection du capteur magnétique.

Le système selon la présente invention est particulièrement fiable car l'écartement des deux véhicules est commandé par la sortie de la masse ferromagnétique du champ de détection du capteur. Cela se produit bien entendu lorsque le véhicule se déplace dans un tournant ou lorsqu'il se trouve en dévers, mais également lorsque le capteur magnétique tombe en panne ou lorsque la masse ferromagnétique n'est pas dans sa position normale. Ainsi, dans la plupart des cas de fonctionnement anormaux, les deux véhicules attelés sont automatiquement mis en position écartée, dans laquelle il n'existe aucun danger de heurt lors des virages ou des dévers.

Par ailleurs, l'utilisation d'un capteur magnétique coopérant avec une masse ferromagnétique permet d'assurer un fonctionnement satisfaisant du système quelque soit les conditions atmosphériques, en particulier lors des intempéries.

La présente invention concerne également un véhicule tracteur muni d'un tel système.

Selon un mode de réalisation préféré de la présente invention, le véhicule comporte en outre un circuit de temporisation délivrant un signal de rapprochement au bout d'un délai déterminé à compter de l'entrée dans la masse ferromagnétique dans le champ de détection du capteur magnétique.

Lorsque l'ensemble routier se déplace sur une route en lacets, le système selon cette variante assure un maintien en position allongée du dispositif d'attelage. On évite ainsi une usure excessive du système d'attelage ainsi que des heurts entre les deux véhicules lors des changements rapides de direction. De préférence, le délai est compris entre 5 et 20 secondes, de préférence 10 secondes.

Selon un autre mode de réalisation préféré, le vérin hydraulique comporte des moyens de blocage manuels en position allongée. Il est ainsi possible au conducteur d'empêcher le retour en position rapprochée lors d'une défaillance du système hydraulique. Ces moyens de blocage manuels peuvent être constitués par tous dispositifs connus de l'homme du métier, et un moyen particulier sera décrit par la suite à titre d'exemple non limitatif.

Selon une variante avantageuse, la masse ferromagnétique est fixée à l'extrémité d'une tige disposée dans le plan vertical médian de l'un des véhicules, ladite tige étant déformable élastiquement.

Selon une autre variante similaire, la masse ferromagnétique est fixée à l'extrémité d'une tige disposée dans le plan vertical médian de l'un des véhicules, ladite tige étant fixée sur ledit véhicule par l'intermédiaire d'une embase déformable élastiquement.

Ces deux variantes évitent la déformation définitive du support de la masse ferromagnétique lors d'un choc accidentel. Lorsque les raisons de cette déformation ont disparues, la masse ferromagnétique revient automatiquement dans sa position normale, c'est-à-dire dans le champ de détection du capteur magnétique lorsque l'ensemble routier est en ligne droite sur un terrain plat.

De préférence, le système selon la présente invention comporte des moyens hydrauliques, pneumatiques ou électriques assurant le passage automatique des moyens d'attelage en position écartée, ainsi que le déclenchement d'un signal d'alarme dans la cabine du conducteur.

Selon un mode de réalisation particulier, le véhicule selon la présente invention comporte un circuit hydraulique constitué par :
- une pompe mise en route au moment de l'émission du signal de rapprochement ou au moment de la sortie de la masse ferromagnétique du champ de détection du capteur magnétique,
- un réservoir de fluide hydraulique,
- un premier distributeur activé par la sortie de la masse ferromagnétique du champ du capteur magnétique et désactivé par un détecteur de fin de course "écarté", ce distributeur alimentant la première chambre du vérin,
- un second distributeur activé par le signal de rapprochement et désactivé par un détecteur de fin de course "rapproché", ledit distributeur alimentant la seconde chambre du vérin,
- un accumulateur de fluide hydraulique muni d'un présostat actionnant la pompe hydraulique lorsque la pression du fluide est inférieure à un seuil prédéterminé,
- un troisième distributeur disposé entre l'accumulateur et la première chambre du vérin, ledit troisième distributeur étant activé manuellement et désactivé par le signal de rapprochement.

Selon un mode de réalisation avantageux, le système comporte en outre un détecteur de pression relié à la première chambre du vérin et à la deuxième chambre du vérin, ce détecteur de pression délivrant un signal d'alarme lorsque la pression s'abaisse en-dessous d'un seuil prédéterminé.

Avantageusement, le circuit comporte un circuit temporisateur délivrant un signal d'alarme et d'interruption de la pompe hydraulique lorsque le présostat détecte pendant une durée déterminée une pression inférieure au seuil prédéterminé.

Avantageusement, le réservoir comporte un détecteur de niveau minimal délivrant un signal d'interruption de la pompe et de l'alarme.

Un mode d'exécution de la présente invention sera décrit ci-après à titre d'exemple nullement limitatif. Il sera fait référence aux dessins annexés dans lesquels :
- la figure 1 représente une vue de côté d'un dispositif d'attelage,
- la figure 2 représente une vue schématique du circuit hydraulique.

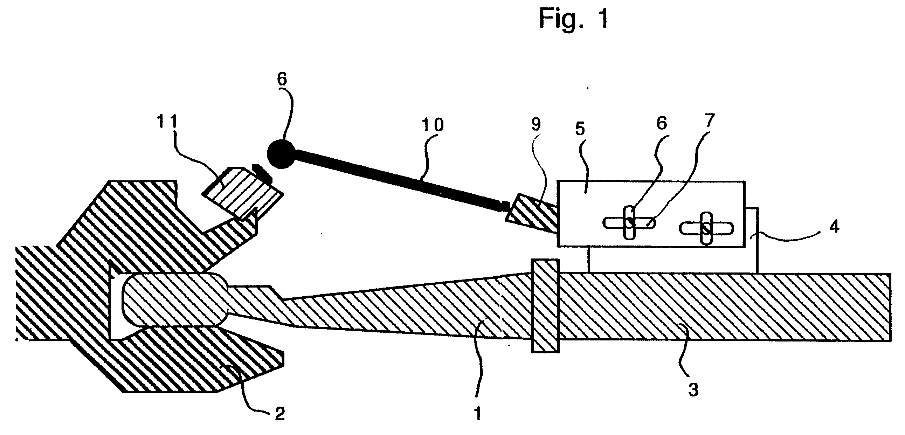

Le dispositif d'attelage représenté en figure 1 est constitué par un timon (1) coopérant avec un crochet (2). Le crochet (2) est fixé dans l'exemple décrit sur le véhicule tracteur alors que le timon (1) prolonge la tige (3) du piston du vérin hydraulique fixé sur la remorque. Bien évidemment, il est possible de fixer le crochet (2) sur un vérin hydraulique disposé aussi bien sur le véhicule tracteur que sur la remorque sans pour autant sortir du cadre de la présente invention. La réalisation générale du dispositif d'attelage relève des connaissances normales de l'homme du métier qui pourra, en particulier, se référer à la demande de brevet européen n° 85401842.1 déposée le 23 septembre 1985 et publiée sous le n° 0176442 ainsi qu'à la demande de brevet français n° 88/04397 déposée le 1er avril 1988 et publiée sous le n° 2.613.312.

Le timon (1) supporte un bloc de liaison (4) sur lequel est fixé le support (5) de la masse ferromagnétique (6). Le support (5) est constitué par un profilé s'adaptant sur le bloc de liaison (4). Le support (5) comporte des fentes oblongues (7, 8) permettant le réglage et le blocage en position de repos de la masse ferromagnétique (6). Une embase (9) en un matériau déformable élastiquement est fixée sur le support (5). Dans l'exemple réalisé par la demanderesse, cette embase (9) est constituée par un bloc cylindrique de caoutchouc chargé. Une tige (10) rigide ou déformable élastiquement est fixée sur cette embase (9). La masse ferromagnétique est disposée à l'extrémité de cette tige. Selon un exemple réalisé par la demanderesse, la tige (10) et la masse ferromagnétique (6) ne forme qu'une pièce en acier. Le crochet d'attelage (2) comporte un capteur magnétique (11) comportant une bobine électromagnétique détectant la présence d'une masse ferromagnétique.

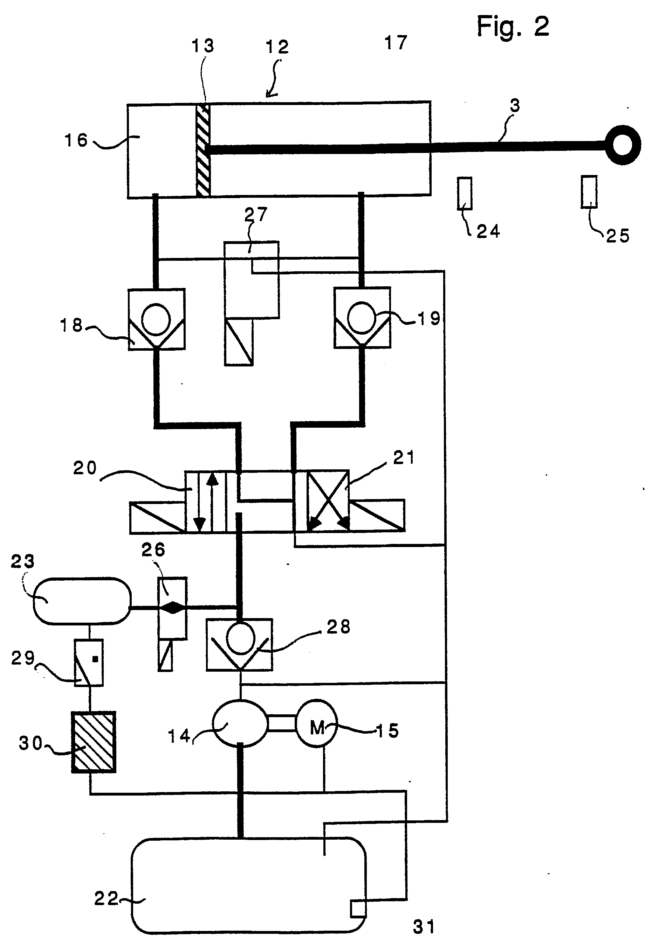

La figure 2 représente une vue schématique du circuit hydraulique. Ce circuit comporte bien évidemment un vérin (12) comportant un piston (13) coopérant avec une tige (3) prolongée par le timon (1). Le circuit hydraulique comporte également une pompe (14) actionnée par un moteur électrique (15). La première chambre (16) et la deuxième chambre (17) du vérin (12) sont reliées à la pompe (14) par l'intermédiaire de clapets anti-retour (18, 19), d'un premier distributeur (20) et d'un second distributeur (21). La pompe hydraulique (14) coopère avec un réservoir de fluide (22). Le circuit comprend, en outre, un accumulateur de pression (23) relié à la pompe (14) par l'intermédiaire d'un troisième distributeur (26). Deux détecteurs de fin de course (24, 25) permettent de connaître la position du piston (13) du vérin (12). Un détecteur de pression (27) est relié à la première chambre (16) et à la seconde chambre (17) du vérin et génère un signal de mauvais fonctionnement en cas de chute de pression. La sortie de la pompe (14) est reliée au système hydraulique par l'intermédiaire d'un clapet anti-retour (28). Un présostat (29) muni d'un circuit de temporisation (30) permet de surveiller la pression de l'accumulateur (23).

Dans des conditions normales, le fonctionnement du système est le suivant :
- lorsque l'ensemble tracteur-remorque entame un virage ou aborde une déclivité, la masse ferromagnétique (6) est entraînée par le timon (1) et sort du champ de détection du capteur magnétique (11). Le signal de sortie du capteur magnétique (11) est ainsi modifié, ce qui provoque la mise en route du moteur électrique (15) actionnant la pompe hydraulique (14). Cette modification du signal de sortie du capteur magnétique (11) provoque également l'activation du premier distributeur (20). De ce fait, la première chambre (16) est alimentée d'une part par la pompe hydraulique (14) et d'autre part par l'accumulateur de pression (23). Le fluide hydraulique se trouvant dans la seconde chambre (17) et par contre renvoyé dans le réservoir de fluide (22). L'alimentation de la première chambre (16) du vérin (12) provoque le déplacement du piston (13). Lorsque le détecteur de fin de course (25) délivre un signal "écarté" correspondant à l'extension maximale du vérin (12), le premier distributeur (20) revient en position neutre. Par ailleurs, le moteur électrique (15) de la pompe hydraulique (14) est arrêté dès que le présostat (29) délivre un signal correspondant à une pression supérieure à la pression minimale dans l'accumulateur de fluide (23);
- lorsque l'ensemble tracteur-remorque revient en ligne droite, sur terrain plat, la masse ferromagnétique (6) revient dans le champ de détection du capteur magnétique (11). Le signal délivré par le capteur magnétique (11) provoque l'alimentation du moteur électrique (15) de la pompe hydraulique (14). Ce signal provoque également l'activation du deuxième distributeur (21) permettant l'alimentation de la deuxième chambre (17) du vérin hydraulique (12). De ce fait, le piston (13) est repoussé. Le fluide hydraulique se trouvant dans la première chambre (16) retourne dans le réservoir (22). Le troisième distributeur (26) est par ailleurs désactivé pour isolé l'accumulateur de fluide (23). Un détecteur de fin de course (24) arrete le moteur électrique (15) de la pompe hydraulique (14) lorsque le vérin se trouve en position "rapproché".

Un système de contrôle électrique interdit la rentrée du vérin si le présostat (29) détecte une pression insuffisante dans l'accumulateur (23). On interdit ainsi le retour en position rapprochée lorsque la pression hydraulique est insuffisante pour assurer un retour immédiat en position écartée, en cas de besoin.

Si le détecteur (27) détecte une chute de pression signifiant que les chambres (16 et 17) du vérin (12) sont en communication ou que le système hydraulique est défaillant, il génère un signal d'alarme actionnant un voyant lumineux ou un signal sonore dans la cabine du conducteur.

Si le circuit de temporisation (30) détecte la persistance d'une pression hydraulique anormale malgré le déclenchement du moteur électrique (15) de la pompe hydraulique (14) par le présostat (29), ce circuit de temporisation (30) provoque l'arrêt du moteur électrique (15) ainsi que la mise en marche de l'alarme dans la cabine du conducteur.

Une commande manuelle, disposée dans la cabine du conducteur, permet d'activer le distributeur (26). Cette action manuelle permet d'assurer une mise en position d'extension du dispositif d'attelage en cas de défaillance. Lorsque le vérin est en position d'extension, le conducteur peut bloquer la tige (3) par une broche traversant la tige ainsi que deux supports fixes.

Il est bien entendu possible de prévoir d'autres sécurités assurant notamment le blocage du circuit hydraulique lorsque le frein de parcage du véhicule tracteur est actionné.

Le réservoir de fluide hydraulique (22) comporte en outre un détecteur de niveau (31). Ce détecteur de niveau (31) arrête le fonctionnement de la pompe (14) et génère une alarme lorsque le niveau du fluide hydraulique descend endessous d'une valeur déterminée.

Il va de soi que la présente invention ne doit pas être considérée comme limitée au mode de réalisation décrit et représenté dans ce qui précède, mais couvre au contraire toutes les variantes.

## Revendications

1 - Remorque attelable comportant un châssis muni d'un premier dispositif d'attelage apte a coopérer avec un second dispositif d'attelage solidaire d'un autre véhicule, l'un au moins des dispositifs d'attelage étant extensible longitudinalement sous l'effet d'un vérin hydraulique dont l'allongement est commandé par un moyen d'acquisition de l'angle relatif entre la remorque et ledit véhicule, caractérisée en ce que le moyen d'acquisition de l'angle relatif entre la remorque et le véhicule est constitué par un capteur magnétique (11) unique, solidaire de l'un des véhicules, et d'une masse ferromagnétique quasi ponctuelle (6) solidaire de l'autre véhicule, ladite masse ferromagnétique (6) étant positionnée dans le champ de détection du capteur magnétique (11) lorsque les deux véhicules attelés sont disposés en ligne droite sur un terrain plat, le capteur magnétique (11) délivrant un signal de rapprochement lorsqu'il détecte la présence de ladite masse ferromagnétique (6).

2 - Véhicule tracteur comportant un chassis muni d'un premier dispositif d'attelage apte à coopérer avec un second dispositif d'attelage solidaire d'une remorque, l'un au moins des dispositifs d'attelage étant extensible longitudinalement sous l'effet d'un vérin hydraulique dont l'allongement est commandé par un moyen d'acquisition de l'angle relatif entre la remorque et ledit véhicule, caractérisé en ce que le moyen d'acquisition de l'angle relatif entre la remorque et le véhicule est constitué par un capteur magnétique (11) unique, solidaire de l'un des véhicules, et d'une masse ferromagnétique quasi ponctuelle (6) solidaire de l'autre véhicule, ladite masse ferromagnétique (6) étant positionnée dans le champ de détection du capteur magnétique (11) lorsque les deux véhicules attelés sont disposés en ligne droite sur un terrain plat, le capteur magnétique (11) délivrant un signal de rapprochement lorsqu'il détecte la présente de ladite masse ferromagnétique (6).

3 - Véhicule selon l'une quelconque des revendications 1 à 2, caractérisé en qu'il comporte en outre un circuit temporisateur délivrant un signal de rapprochement au bout d'un délai déterminé à compter de la pénétration de la masse ferromagnétique (6) dans le champ de détection du capteur magnétique (11).

4 - Véhicule selon la revendication 3, caractérisé en ce que ledit délai est compris entre 5 et 20 secondes, de préférences 10 secondes.

5 - Véhicule selon l'une quelconque des revendications 1 à 4, caractérisé en ce que le vérin hydraulique (12) comporte des moyens de blocage manuels en position allongée.

6 - Véhicule selon l'une quelconque des revendications 1 à 5, caractérisé en ce que la masse ferromagnétique (6) est fixée sur une tige (10) disposée dans le plan vertical médian de l'un des véhicules, ladite tige (10) étant déformable élastiquement.

7 - Véhicule selon l'une quelconque des revendications 1 à 5, caractérisé en ce que la masse métallique (6) est fixée à l'extrémité d'une tige (10) disposée dans le plan vertical médian de l'un des véhicules, ladite tige (10) étant fixée sur ledit véhicule par l'intermédiaire d'une embase (9) déformable élastiquement.

8 - Véhicule selon l'une quelconque des revendications 1 à 7, caractérisé en ce qu'il comporte des moyens hydrauliques, pneumatiques ou électriques assurant le passage automatique des moyens d'attelage en position écartée et le déclenchement d'un signal d'alarme dans la cabine du conducteur.

9 - Véhicule selon l'une quelconque des revendications 1 à 8, caractérisé en ce qu'il comporte un circuit hydraulique constitué par une pompe hydraulique (14) mise en route au moment de l'émission du signal de rapprochement ou au moment de la sortie de la masse ferromagnétique (6) du champ de détection du capteur magnétique (11), un réservoir de fluide hydraulique (22), un premier distributeur (20) activé par la sortie de la masse ferromagnétique (6) du champ de détection du capteur magnétique (11) est désactivé par un détecteur de fin de course "écarté" (25), ledit premier distributeur (20) alimentant la première chambre (16) du vérin (12), un second distributeur (21) activé par le signal de rapprochement est désactivé par un détecteur de fin de course "rapproché" (24), ledit distributeur (21) alimentant la seconde chambre (17) du vérin (12), un accumulateur (23) de fluide hydraulique muni d'un présostat (29) actionnant la pompe hydraulique (14) lorsque la pression de fluide est inférieure à un seuil prédéterminé, un troisième distributeur (26) disposé entre l'accumulateur (23) et la première chambre (16) du vérin (12), ledit troisième distributeur (26) étant activé manuellement et désactivé par le signal de rapprochement.

10 - Véhicule selon la revendication 9, caractérisé en ce qu'il comporte, en outre, un détecteur de pression (27) relié à la première chambre (16) du vérin (12) et à la deuxième chambre (17) du vérin (12), ledit détecteur de pression (27) délivrant un signal d'alarme lorsque la pression s'abaisse en-dessous d'un seuil prédéterminé.

11 - Véhicule selon l'une quelconque des revendications 9 à 10, caractérisé en ce qu'il comporte un circuit temporisateur (30) délivrant un signal d'alarme et d'interruption de la pompe hydraulique (14) lorsque le présostat (29) détecte pendant une durée déterminée une pression inférieure au seuil minimal.

12 - Véhicule selon l'une quelconque des revendications 9 à 11, caractérisé en ce que le réservoir (22) comporte un détecteur de niveau minimal (31) délivrant un signal d'interruption de la pompe hydraulique (14) et actionnant l'alarme.

Fig. 1

Fig. 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2588215 (R.H.JEANSON ET AL.) <br> * page 3, ligne 26 - page 5, ligne 1; figure 2 * | 1, 6, 7 | B60D1/40 <br> B60D1/155 |
| A | EP-A-331563 (SODISENE FABRICATION SA) <br> * revendications 1-12; figure 1 * | 1, 2 | |
| A | EP-A-266328 (VBG PRODUKTER AB) <br> * colonne 5, lignes 17 - 27; figure 7 * | 1 | |
| A | MACHINE DESIGN <br> vol. 35, no. 3, 31 janvier 1963, <br> pages 107 - 110; M.E.LONG ET AL.: <br> "Design notebook: Hydraulic accumulators" | 9, 10 | |

**DOMAINES TECHNIQUES RECHERCHES (Int. Cl.5)**

B60D

Le présent rapport a été établi pour toutes les revendications

| Lieu de la recherche | Date d'achèvement de la recherche | Examinateur |
|---|---|---|
| LA HAYE | 05 OCTOBRE 1990 | PEMBERTON P. |

EPO FORM 1503 03.82 (P0402)